**Europäisches Patentamt**

**European Patent Office**

**Office européen des brevets**

(19)

(11) Veröffentlichungsnummer: **0 401 811**

**A1**

(12) ## EUROPÄISCHE PATENTANMELDUNG

(21) Anmeldenummer: **90110756.5**

(22) Anmeldetag: **07.06.90**

(51) Int. Cl.⁵: **A62D 3/00, C10B 49/16, B01J 19/18, //C02F11:10, B09B3:00**

(30) Priorität: **08.06.89 DE 3918718**

(43) Veröffentlichungstag der Anmeldung:
**12.12.90 Patentblatt 90/50**

(84) Benannte Vertragsstaaten:
**DE ES FR GB IT**

(71) Anmelder: **Nukem GmbH**
**Rodenbacher Chaussee 6 Postfach 11 00 80**
**D-6450 Hanau 11(DE)**

(72) Erfinder: **Huschka, Hans, Dipl.-Chem.**
**Grünaustrasse 5**
**D-6450 Hanau 9(DE)**
Erfinder: **Demmich, Jörg, Dr., Dipl.-Ing.**
**Wiener Ring 95**
**D-8700 Würzburg(DE)**
Erfinder: **Maurer, Paul-Gerhard, Dr.,**
**Dipl.-Chem.**
**Bergstrasse 1**
**D-6451 Neuberg 2(DE)**

(54) **Vorrichtung zur thermischen Behandlung von organischen und anorganischen Stoffen.**

(57) Vorrichtung zur thermischen Behandlung von festen und schlammförmigen organischen Stoffen und von mit organischen Stoffen verunreinigten anorganischen Stoffen, bestehend aus einem aufrechtstehenden, mit keramischen oder metallenen Kugeln (3) gefüllten, zylinderförmigen Reaktor (1), der mit einem Rührer (4) zur Bewegung der Kugeln in radialer und axialer Richtung versehen ist,
dadurch kekennzeichnet,
daß die Kugeln über mehrere, in Abständen übereinander angeordnete Böden (2) verteilt sind, die eine für Gase und feine Feststoffpartikel durchlässige Lochung aufweisen.

EP 0 401 811 A1

## Vorrichtung zur thermischen Behandlung von organischen und anorganischen Stoffen

Die Erfindung betrifft eine Vorrichtung zur thermischen Behandlung von festen und schlammförmigen organischen Stoffen und von mit organischen Stoffen verunreinigten anorganischen Stoffen, bestehend aus einem aufrechtstehenden, mit keramischen oder metallenen Kugeln gefüllten, zylinderförmigen Reaktor, der mit einem Rührer zur Bewegung der Kugeln in radialer und axialer Richtung versehen ist.

Zur thermischen Behandlung von organischen und anorganischen Stoffen in aufrechtstehenden, zylinderförmigen Öfen sind einerseits Reaktoren mit festen oder bewegten Kugelschüttungen bekannt, andererseits werden hierzu Etagenöfen oder Tellertrockner eingesetzt.

So wird in der DE-OS 30 28 193 eine Vorrichtung zur Behandlung von organischen Substanzen beschrieben, in der weitgehend kugelförmige keramische Gebilde mittels eines Rührers so bewegt werden, daß sie durch die abgeschiedenen Zersetzungsprodukte nicht zusammenbacken. Es können hierbei allerdings nur relativ kleine Substanzmengen in der Größenordnung von 1 kg/h verarbeitet werden, da bei größeren Ofendurchmessern Probleme bei der Wärmeübertragung auftreten. Bei einem Ofendurchmesser von mehr als 15 cm reicht im allgemeinen die integrale Wärmeleitfähigkeit der Füllkörperschüttung nicht mehr aus, um ein Durchbrechen von unzersetzten Einsatzprodukten in der Ofenmitte zu verhindern.

Aus der DE-PS 6 46 182 ist es bekannt, zur Schwelung von bituminösen Brennstoffen diese in einem beheizten, aufrechtstehenden, zylinderförmigen Reaktor in axialer Richtung zu bewegen, wobei die Brennstoffe über eine Schnecke im Zentrum des Reaktors von unten nach oben transportiert werden und an der Wand des Reaktors von oben nach unten sinken. Für die thermische Zersetzung und Umsetzung organischer und anorganischer Substanzen ist diese Vorrichtung allerdings nicht geeignet, da das Füllkörperbett leicht zusammenbacken kann.

In der DE-P 32 05 569 wird eine Vorrichtung zur thermischen Zersetzung und Umsetzung von organischen und anorganischen Substanzen beschrieben, die sich aus einem beheizten, aufrechtstehenden, zylinderförmigen Reaktor mit keramischen Füllkörpern und einem Rührer zusammensetzt, bestehend aus Rührerachse, Tragarmen und einem oder mehreren Wendeln.

Nachteilig bei allen diesen Vorrichtungen ist die unzureichende Wärmezufuhr bei indirekter Heizung über die Wand, eine bei größeren Schütthöhen sehr hohes Schüttungsgewicht und eine bei größeren Schütthöhen, d.h. bei ungünstigem Verhältnis zwischen Schütthöhe und Reaktordurchmesser, unzureichende Umwälzung der Schüttung. Diese Effekte wirken sich in erheblichem Maß durchsatzbegrenzend aus.

In K.J. Thome-Kozmiensky, EF-Verlag für Energie- und Umwelttechnik GmbH, Berlin 1985, Seite 381-391, werden Etagenöfen beschrieben, die je nach Einsatzbereich auch Telleröfen oder Tellertrockner genannt werden. Die Öfen bestehen aus einem Gehäuse, das im wesentlichen eine zylindrische Form aufweist und stehend angeordnet ist, mit im Innern etagenförmig übereinander angeordneten Tellern, über die das Gut durch Krählarme bewegt wird, und einer zentrisch angeordneten aufrechtstehenden Antriebswelle. In diesem Ofen läuft ein direkter Trocknungsvorgang kombiniert mit einem Verbrennungsvorgang ab. Das Brenngut, wie Dickschlamm, Filterkuchen, Filterpreßling oder Müll-Klärschlammgemisch, wird auf den obersten Herd bzw. Teller aufgegeben. Während des gesamten Prozesses wird das Gut von den Rührzähnen der Krählarme gewendet und weitertransportiert, wobei es von Etage zu Etage durch wechselweise innen oder außen angeordnete Schächte fällt. Durch die ständige Bewegung wird die für die Reaktionen notwendige Austauschfläche zwischen Material und Luft-Gas-Strom durch Ausbreiten auf den Herdflächen erzeugt.

Nachteilig bei diesen Vorrichtungen ist die große Anzahl von einzelnen Etagen und damit die erforderlich große Bauhöhe des Ofens, um die notwendige Mindestverweilzeit im Ofen für den zu behandelnden Stoff zu erreichen, sowie die nicht definierte Gutsbewegung auf den einzelnen Etagen, die zu Agglomerationen und damit zu einer geringen Gutoberfläche führt, welche bei Trocknungs- und Verbrennungsvorgängen möglichst groß sein sollte. Darüber hinaus ergibt sich infolge der ungeordneten Schüttgutbewegung ein unerwünscht großes Verweilzeitspektrum des zu behandelnden Stoffs.

Es war daher Aufgabe der vorliegenden Erfindung, eine Vorrichtung zur thermischen Behandlung von festen und schlammförmigen organischen Stoffen und von mit organischen Stoffen verunreinigten anorganischen Stoffen zu entwickeln, bestehend aus einem aufrechtstehenden, mit keramischen oder metallenen Kugeln gefüllten, zylinderförmigen Reaktor, der mit einem Rührer zur Bewegung der Kugeln in radialer und axialer Richtung versehen ist, der einen hohen Durchsatz bei definierter Reaktionsgutbewegung ermöglicht.

Diese Aufgabe wird erfindungsgemäß dadurch gelöst, daß die Kugeln über mehrere, in Abständen übereinander angeordneten Böden verteilt sind, die eine für Gase und feine Feststoffpartikel durchlässige Lochung aufweisen.

Vorzugsweise beträgt das Verhältnis zwischen Schüttungshöhe der Kugeln und Reaktordurchmesser auf jedem Boden zwischen 0,1 und 2. Weiterhin ist es günstig, wenn die Rührerwelle ein-oder mehrmals unterteilt und jeder Rührerabschnitt gesondert angetrieben ist. Von Vorteil ist es auch, wenn die Rührerwelle hohl ausgebildet ist. so daß gasförmige Reaktionspartner bzw. Reaktionsprodukte zu, und von den einzelnen Kugelschüttungen über die Rührerwelle zu- und abgeführt werden können. Ebenfalls vorteilhaft ist eine Ausgestaltung der Reaktorböden für eine indirekte Beheizung des Reaktionsgutes.

Durch gezieltes Rühren der einzelnen Kugelschüttungsabschnitte mit einem durchgängigen oder in einzelne Abschnitte aufgeteilten Rührer (z.B. Wendelrührer mit einzelnen Wendelabschnitten), werden die Kugeln in einer geordneten Schlaufenbewegung an der Reaktorwand aufwärts und über Schwerkraftwirkung in der Reaktormitte abwärts bewegt. Der oberhalb der ersten Kugelschüttung aufgegebene, zu behandelnde Stoff sowie die entstehenden gasförmigen Trocknungs-, Reaktions- bzw. Verbrennungsprodukte bewegen sich mit einem engen Verweilzeitspektrum durch die gerührten Kugelschüttungen, wobei Partikelagglomerationen durch die Mahlwirkung der Kugeln verhindert werden. Die Folge ist die stete Bildung einer großen Schüttgutoberfläche, einer ständig neuen Oberfläche und damit einer Verringerung der notwendigen Verweilzeit des Stoffes im Ofen. Die Reaktionsfreudigkeit des zu behandelnden Stoffes wird durch tribochemische Aktivierung erhöht. Weiterhin werden Verkrustungs-/ Verbackungsprobleme auf den Kugeln, dem Rührer und der Reaktorwand durch die kontinuierliche Kugelbewegung vermieden. Um eine gezielte Bewegung der jeweiligen Kugelschüttung zu erreichen, sollte eine Schütthöhe mit einem Verhältnis von Schüttungshöhe und Reaktordurchmesser zwischen 0,1 und 2,0 gewählt werden. Normalerweise verwendet man für die Schüttungen keramische Kugeln.

Führt man die einzelnen Reaktorböden, die z.B. als Sieb- oder Ringroste mit vorgegebenen freiem Querschnitt konzipiert sind, und die zylindrische Reaktorwand doppelt. d.h. mit einem Hohlraum aus, so lassen sich die einzelnen Schüttungen z.B. mit Rauchgas indirekt beheizen. Dadurch lassen sich diese Reaktoren für die pyrolytische Zersetzung und/oder indirekte Trocknung von Schlämmen, insbesondere Klärschlamm, einsetzen. Durch die zusätzliche Beheizung der Reaktorböden lassen sich wesentlich größere Wärmemengen in das System eintragen und die Durchsätze der zu behandelnden Stoffen erhöhen. Auch ein radialer Temperaturgradient wird durch diese Maßnahme verringert.

Die erfindungsgemäße Vorrichtung läßt sich auch für die Verbrennung und/oder direkte Trocknung von Schlämmen, insbesondere Klärschlamm, verwenden. Hierzu kann z.B. Verbrennungsluft bzw. Trocknungsgas von unten im Gegenstrom zu dem oben aufgegebenen zu behandelnden Stoff in den Reaktor eingespeist werden.

Die Aufteilung des Reaktors in mehrere Kugelschüttungen ermöglicht es, in jeder einzelnen Schüttung gezielt die Verfahrensparameter einzustellen, die für einen bestimmten Verfahrensschritt aus der Gesamtumsetzung erforderlich sind. Man kann so z.B. in den einzelnen Schüttungen Trocknung, Pyrolyse und Oxidation nebeneinander durchführen.

Es bietet sich an, vor allem gasförmige Reaktionspartner durch die Rührerwelle in die einzelnen Kugelschüttungen einzubringen. Auf diese Weise ist es zum Beispiel möglich, nach einem Pyrolyseschritt unter Sauerstoffausschluß durch Einspeisen von Luft oder Sauerstoffgemischen in einer anderen Schüttung den Restkohlenstoff herauszubrennen oder Aschen oxidierend zu behandeln. Selbstverständlich kann man gasförmige Reaktionsprodukte auch über die Rührerwelle abziehen.

Als weiterer konstruktiver, aber auch verfahrenstechnischer Vorteil bietet sich an, die Rührerwelle zu unterteilen, eventuell in einem Zwischenboden zusätzlich zu lagern und auch getrennt anzutreiben. Dabei hat man die Möglichkeit über unterschiedliche Drehzahlen, die Verweilzeiten des festen Reaktionspartners in den einzelnen Kugelschüttungszonen zu beeinflussen.

Ist in einer Kugelschüttungszone die Schütthöhe des Kugelbettes niedrig, d.h. das Verhältnis Schüttungshöhe zu Schüttungsdurchmesser klein, so muß die erforderliche Wärme mehr oder minder vollständig über den beheizten Bettboden aufgebracht werden.

Sollte es notwendig werden, zur Durchsatzerhöhung größere Wärmeleistungen in den Reaktor einzubringen, ist es vorteilhaft Metallkugeln zu verwenden, z.B. Edelstahlkugel. Dadurch können größere Wärmemengen gleichmäßig im Reaktor verteilt werden.

Vorzugsweise wird der erfindungsgemäße Reaktor für die Pyrolyse von Klärschlamm eingesetzt. Der meist mit Kalk versetzte Klärschlamm wird von oben in den Reaktor eingespeist und in den einzelnen Schüttungen die Trocknung, die Pyrolyse und die oxidierende Behandlung der Pyrolyserückstände durchgeführt. Dadurch erreicht man eine maximale Volumenreduktion der eingegebenen Klärschlämme, verbunden mit einer sicheren Entsorgung von darin enthaltenen Schwermetallen und organischen Schadstoffen.

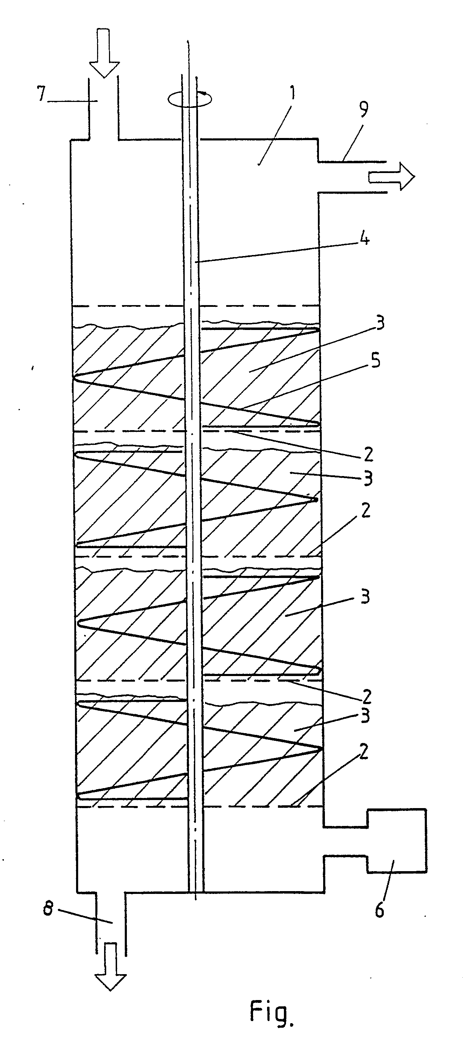

Die Abbildung zeigt schematisch eine beispiel-

hafte Ausführungsform der erfindungsgemäßen Vorrichtung im Längsschnitt. Der Reaktor (1) enthält in Abständen übereinander fünf mit Löchern versehene Böden (2) und vier Kugelschüttungen (3). Zentral ist eine Rührerwelle (4) gelagert, an der sich Rührerwendel (5) befinden. Die Beheizung des Reaktors erfolgt über einen Brenner (6). Der Eintrag des zu behandelnden Stoffes erfolgt von oben über eine Schleuße (7), die Asche, bzw. das feste Reaktionsprodukt wird am Reaktorboden ebenfalls über eine Schleuße (8) ausgetragen, die gasförmigen Produkte entweichen über ein Leitungssystem (9) am Kopf des Reaktors (1). Die Böden (2) besitzen Lochdurchmesser von bis mm. Zur Pyrolyse von Klärschlamm wird der entwässerte Klärschlamm mit einem Trockensubstanzgehalt von etwa 40 - 50 Gew.% unter Zusatz von 10 - 20 Gew.% CaO auf die oberste Kugelschüttung aufgebracht und in einem Inertgasstrom bis auf 300-400° C aufgeheizt, wobei die Resttrocknung erfolgt, aber auch die Freisetzung erster Pyrolyseprodukte. Der Feststoff wandert durch das gerührte Kugelbett und den Lochboden auf die zweite Kugelschüttung, in der bei 600-800° C die Pyrolyse durchgeführt wird, wobei auch toxischer Halogenkohlenwasserstoff zersetzt und das Halogen an CaO abgebunden wird. In der dritten Kugelschüttung werden alle gasförmigen Pyrolyseprodukte und Wasserdampf aus dem Klärschlamm freigesetzt und der verbleibende Feststoff in die vierte Kugelschüttung eingebracht, wo unter Zumischung von Sauerstoff der aus der Pyrolyse stammende Restkohlenstoff verbrannt wird. Außerdem wird das vorhandene Schwermetall vollständig in die schwer lösliche oxidische Form übergeführt.

Die erfindungsgemäße Vorrichtung hat den großen Vorteil, daß durch Änderung der Temperaturen in den einzelnen Kugelschüttungen die Fraktionen Pyrolysegas und Pyrolyseöl den jeweiligen Forderungen angepaßt werden können. Weiterhin können die Verweilzeiten von Gas und Feststoff unabhängig voneinander variiert werden und in die einzelnen Kugelschüttungen weitere Reaktionspartner eingebracht werden.

Die Vorrichtung eignet sich auch zur Reinigung von mit organischen Schadstoffen verunreinigten Erdböden.

## Ansprüche

1. Vorrichtung zur thermischen Behandlung von festen und schlammförmigen organischen Stoffen und von mit organischen Stoffen verunreinigten anorganischen Stoffen, bestehend aus einem aufrechtstehenden, mit keramischen oder metallenen Kugeln gefüllten, zylinderförmigen Reaktor, der mit einem Rührer zur Bewegung der Kugeln in radialer und axialer Richtung versehen ist, dadurch gekennzeichnet, daß die Kugeln über mehrere, in Abständen übereinander angeordnete Böden (2) verteilt sind, die eine für Gase und feine Feststoffpartikel durchlässige Lochung aufweisen.

2. Vorrichtung nach Anspruch 1, dadurch gekennzeichnet, daß das Verhältnis zwischen Schüttungshöhe der Kugeln und Reaktordurchmesser zwischen 0,1 und 2 beträgt.

3. Vorrichtung nach Anspruch 1 oder 2, dadurch gekennzeichnet, daß die Rührerwelle (4) hohl ausgebildet ist.

4. Vorrichtung nach einem der vorherigen Ansprüche, dadurch gekennzeichnet, daß die Rührerwelle (4) ein- oder mehrmals unterteilt, und jeder Rührerabschnitt gesondert angetrieben ist.

5. Vorrichtung nach Anspruch 1 bis 5, dadurch gekennzeichnet, daß die Böden (2) für eine indirekte Beheizung ausgebildet sind.

Fig.

EUROPÄISCHER RECHERCHENBERICHT

Europäisches Patentamt

Nummer der Anmeldung

EP 90 11 0756

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 090 148 (NUKEM GmbH) <br> * Seite 3, Zeile 12 - Seite 4, Zeile 19; Seite 5, Zeile 35 - Seite 6, Zeile 28; Ansprüche 1,2,9,10 * <br> --- | 1-3 | A 62 D 3/00 <br> C 10 B 49/16 <br> B 01 J 19/18 // <br> C 02 F 11/10 <br> B 09 B 3/00 |
| Y | DE-A-3 109 513 (DORYOKURO KAKUNENRYO KAIHATSU JIGYODAN) <br> * Ansprüche 1,2,4-6,8,9; Seite 11, Zeilen 18-31; Seite 12, Zeile 26 - Seite 13, Zeile 4 * <br> --- | 1-3 | |
| A | FR-A-1 041 780 (L. WEBER) <br> * Seite 2, linke Spalte, Zeilen 3-45; Ansprüche 7,8 * <br> ----- | 1,4 | |

RECHERCHIERTE SACHGEBIETE (Int. Cl.5)

A 62 D
C 10 B
B 01 J

Der vorliegende Recherchenbericht wurde für alle Patentansprüche erstellt

| Recherchenort | Abschlußdatum der Recherche | Prüfer |
|---|---|---|
| DEN HAAG | 14-09-1990 | FLETCHER A.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)